# EUROPÄISCHE PATENTSCHRIFT

(11) **EP 2 820 987 B1**
(45) Veröffentlichungstag und Bekanntmachung des Hinweises auf die Patenterteilung: **09.05.2018**
(21) Anmeldenummer: 14174881.4
(22) Anmeldetag: 30.06.2014
(51) Int. Cl.: A47J 43/07

(54) **Elektromotorisch betriebene Küchenmaschine**
Kitchen appliance operated by electric motor
Robot ménager fonctionnant avec un moteur électrique

(30) Priorität: 01.07.2013 DE 102013106865
(43) Veröffentlichungstag der Anmeldung: 07.01.2015
(73) Patentinhaber: Vorwerk & Co. Interholding GmbH, 42275 Wuppertal (DE)
(72) Erfinder: Meggle, Martin, 33442 Herzebrock (DE)
(74) Vertreter: Müller, Enno

(56) Entgegenhaltungen:
- WO-A2-2014/111204
- CN-Y- 201 211 130
- DE-A1-102009 059 181
- DE-A1-102010 060 650
- DE-A1-102012 103 880
- US-A- 5 768 978

## Beschreibung

Die Erfindung betrifft eine elektromotorisch betriebene Küchenmaschine mit einem Rührgefäß und einem Rührwerk, wobei die Küchenmaschine benutzerspezifisch einstellbar ist, wobei weiter ein händisch bedienbares Bedienteil vorgesehen ist, bspw. zur Einstellung einer gewünschten Drehzahl, wobei darüber hinaus das Bedienteil als von der Küchenmaschine abnehmbares Element gebildet ist.

Küchenmaschinen der in Rede stehenden Art sind bekannt, so insbesondere in Form von Maschinen für den Haushaltsbereich. Diese verfügen bekannterweise über ein Rührgefäß, in welchem bevorzugt bodenseitig ein motorisch antreibbares Rührwerk vorgesehen ist. Mittels der Küchenmaschine sind Lebensmittel zur Zubereitung von Speisen vorbereitbar, beispielsweise zerkleinerbar. Darüber hinaus sind solche Küchenmaschinen bevorzugt auch zur Herstellung von Speisen ausgelegt. Insbesondere zur Einstellung einer gewünschten Drehzahl des Rührwerks sind derartige Küchenmaschinen bevorzugt mit einem von Hand durch den Benutzer zu bedienenden Bedienteil versehen, darüber hinaus bevorzugt zusätzlich oder alternativ mit einem Bedienteil zur Einstellung weiterer Maschinenparameter. Ein solches Bedienteil kann in bekannter Weise abnehmbar ausgebildet sein, so beispielsweise zur Reinigung desselben beziehungsweise zur Reinigung der Maschinenoberfläche im Bereich des Bedienteiles. Auch ist in diesem Zusammenhang bekannt, die Küchenmaschine nutzerspezifisch einzustellen, beispielsweise in der Art, dass in Abhängigkeit vom bevorzugt zu identifizierenden Benutzer einzelne oder mehrere Funktionen der Küchenmaschine nicht oder nur eingeschränkt nutzbar sind, so beispielsweise eine vorgegebene Drehzahlbandbreite.

Aus der nicht vorveröffentlichen WO 2014/111204 A2 ist eine Küchenmaschine mit einem von der Küchenmaschine abnehmbaren Bedienteil bekannt, welches Bedienteil seinerseits eine Bedieneinheit aufweist.

Die Erfindung beschäftigt sich mit der Aufgabe, eine Küchenmaschine der in Rede stehenden Art insbesondere hinsichtlich einer benutzerspezifischen Einstellung vorteilhaft auszubilden.

Diese Aufgabe ist beim Gegenstand des Anspruches 1 gelöst, wobei darauf abgestellt ist, dass das Bedienteil einen Datenspeicher und eine Datenschnittstelle aufweist, zum geräteseitigen Auslesen der in dem Datenspeicher enthaltenen Daten, wobei mittels der Daten eine benutzerspezifische Einstellung festlegbar ist und dass das Bedienteil ein Drehsteller ist.

Das Bedienteil ist entsprechend bevorzugt auf den Benutzer der Küchenmaschine eingestellt. Das Bedienteil stellt so einen benutzerseitigen Schlüssel dar. Analog zu einem Mundstück eines Instruments kann das Bedienteil als persönlicher Gegenstand angesehen werden, mit welchem die Küchenmaschine auf den Benutzer eingestellt werden kann. Hierzu weist das Bedienteil einen Datenspeicher auf, insbesondere einen nicht flüchtigen Datenspeicher. Zur Übertragung der in dem Datenspeicher abgelegten Informationen beziehungsweise Befehle ist eine Datenschnittstelle zwischen Bedienteil und Küchenmaschine vorgesehen.

Die Datenschnittstelle kann bevorzugt eine elektrische Schnittstelle sein, bspw. in Form einer Stecker-Kupplung-Schnittstelle. Derartige Datenschnittstellen sind beispielsweise in Form von standardisierten USB-Schnittstellen bekannt.

Die Datenschnittstelle zwischen dem Bedienteil und der Küchenmaschine kann also nach Art einer bekannten USB-Schnittstelle ausgebildet sein. Hierzu oder auch unabhängig von einer Ausbildung im Sinne einer üblichen USB-Schnittstelle kann die Datenschnittstelle küchenmaschinenseitig und/oder bedienteilseitig durch nebeneinander angeordnete metallische, jeweils eine Kontaktfläche aufweisende Kontaktelemente gebildet sein. Die Kontaktelemente sind bedienteilseitig bevorzugt auf einer dem Gehäuse der Küchenmaschine zuordbaren Fläche des Bedienteils angeordnet. Weiter bevorzugt können die entsprechenden Gegenkontakte der Küchenmaschine einen Teil der Gehäuseaußenfläche der Küchenmaschine darstellen.

Darüber hinaus ist auch eine Datenschnittstelle alternativ oder auch kombinativ zu einer elektrischen Schnittstelle in Form einer drahtlosen Schnittstelle möglich, so beispielsweise in Form einer Bluetooth-Schnittstelle.

Eine gegebenenfalls benötigte Stromversorgung des Datenspeichers und/oder des bedienteilseitigen Schnittstellen-Elements ist in einer Ausführungsform bevorzugt über eine Steckverbindung des Bedienteils an der Küchenmaschine vorgesehen.

Die benutzerspezifischen Einstellungen werden anhand der in dem Bedienteil gespeicherten Daten über die Datenschnittstelle auf die Küchenmaschine übertragen. Alternativ führen die übertragenen Daten allein zu einer Beeinflussung von in der Küchenmaschine hinterlegten Steuerungs-Daten der Küchenmaschine.

Bezüglich der benutzerspezifischen Einstellungen, welche mit Zuordnung des bevorzugt benutzerdefinierten Bedienteils zu der Küchenmaschine in der Küchenmaschine festgelegt werden, handelt es sich weiter bevorzugt um eine mögliche Drehzahleinstellung. So kann mittels des eingesteckten beziehungsweise zugeordneten Bedienteils, welches zugleich zur Drehzahleinstellung dient, jedoch auch ein weiteres, nicht unmittelbar auf die Drehzahl einwirkendes Bedienteil sein kann, benutzerdefiniert eine maximale Drehzahl des Rührwerks freigeschaltet werden. Sind weiter beispielsweise maximale Rührwerk-Drehzahlen (ohne benutzerspezifische Einschränkung) von bis zu 11.000 U/min möglich, so kann eine benutzerspezifische Einschränkung beispielsweise die maximale Drehzahl auf 500, 1.500 oder 3.000 U/min beschränken. Eine weitere mögliche benutzerspezifische Einstellung betrifft bei Anordnung einer Heizung in der Küchenmaschine eine maximale Temperatureinstellung, die bevorzugt niedriger ist als die bei uneingeschränkter Nutzung maximal mögliche Temperatureinstellung der Küchenmaschine. Auch können zufolge entsprechender Anordnung des Bedienteiles zu der Küchenmaschine weitere bestimmte Funktionen der Küchenmaschine aktiviert sein oder deaktiviert sein, so beispielsweise eine integrierte Waage und/oder die Möglichkeit einer Zeiteinstellung.

Weiter sind Küchenmaschinen bekannt, welche über ein Display verfügen, beispielsweise ein Touchscreen-Display, über welches bevorzugt eine oder mehrere der vorbeschriebenen Parameter, wie beispielsweise Drehzahl, Temperatur und Zeit durch den Benutzer voreinstellbar sind. Auch hier ist bevorzugt durch die benutzerspezifische Einstellung in Abhängigkeit von dem eingesetzten oder angesetzten Bedienteil eine Einschränkung eines oder mehrerer der Parameter möglich. Darüber hinaus bieten solche Displays die Möglichkeit der Anzeige von Rezepten zur Zubereitung von Speisen. Entsprechend bietet sich eine weitere Möglichkeit der benutzerspezifischen Einstellung in Abhängigkeit von dem Bedienteil, indem bei Zuordnung des Bedienteiles zu der Küchenmaschine zu einer Vielzahl von Rezepten beispielsweise nur eine auf den zugeordneten Benutzer des Bedienteiles angepasste Rezeptauswahl anzeigbar ist. Auch kann, bevorzugt in diesem Zusammenhang, eine benutzerspezifische Einstellung der Bedienoberfläche des Displays, beispielsweise bezüglich der Farbe und/oder Helligkeit gegeben sein.

Darüber hinaus ist bevorzugt, dass zufolge Anordnung des Bedienteiles an der Küchenmaschine ein Teil oder die komplette Gerätesoftware der Küchenmaschine neu programmiert wird. Hierzu kann das Bedienteil beziehungsweise der hierin angeordnete Datenspeicher über einen entsprechenden Datensatz verfügen, der über die Datenschnittstelle zur Neuprogrammierung der Gerätesoftware übertragen wird. Es kann auch zunächst nur vorgesehen sein, dass das Bedienteil über eine Möglichkeit zur Übertragung eines entsprechenden Datensatzes, etwa im Hinblick auf den erforderlichen Datenspeicher und/oder eine Schnittstelle zum Empfang der Daten von außerhalb des Bedienteils, verfügt, um im Bedarfsfall hierüber die genannte Neuprogrammierung vornehmen zu können.

Auch ist bevorzugt, dass mit Zuordnung des Bedienteiles zu der Küchenmaschine über die Datenschnittstelle auf die in dem Bedienteil abgespeicherte Gerätesoftware zugegriffen wird, welche weiter bevorzugt benutzerspezifisch angepasst ist, d.h. gegebenenfalls bestimmte Funktionen oder Parameter zulässt beziehungsweise einschränkt.

In einer weiter bevorzugten Ausgestaltung ist vorgesehen, dass eine Mehrzahl von zu der Aufnahme des Bedienteils in der Küchenmaschine passende Bedienteile vorgesehen sind und dass die Bedienteile hinsichtlich der in ihren Daten festgelegten, jeweiligen benutzerspezifischen Einstellungen der Küchenmaschine unterschiedlich gestaltet sind. So ist die Küchenmaschine bevorzugt mit verschiedenen, der Küchenmaschine zuordbaren Bedienteilen versehbar. Alternativ sind Bedienteile mit erweiterten oder auch eingeschränkten benutzerspezifischen Einstellungen nachrüstbar. So können weiter beispielsweise für bestimmte Familienangehörige, beispielsweise Kinder oder Jugendliche, Bedienteile zur Nutzung der Küchenmaschine vorliegen, die nur eine eingeschränkte Benutzung der Küchenmaschine ermöglichen, so weiter bevorzugt eine eingeschränkte Nutzung des Rührwerks hinsichtlich der Drehzahl und/oder Drehrichtung und/oder eine eingeschränkte Nutzung der Heizung hinsichtlich ihrer Temperaturhöhe. Die Bedienteile sind in einer Ausgestaltung entsprechend beschriftet, beispielsweise mit dem Namen des zugehörigen Benutzers. Alternativ oder ergänzend unterscheiden sich die Bedienteile äußerlich in Form und/oder Farbe. Diese Möglichkeit bietet sich weiter bevorzugt auch dann an, wenn über das Bedienteil die Gerätesoftware überspielt oder programmiert wird. Für den Benutzer kann über die Form und/oder Farbe des Bedienteiles erkennbar sein, mit welcher Software die Küchenmaschine momentan betrieben wird. Darüber hinaus können die mehreren Bedienteile in Form einer Master-Slave-Anordnung vorliegen. Auch können durch das Master-Bedienteil alle möglichen Funktionen der Küchenmaschine freigeschaltet sein. Beispielsweise können bei Nutzung des Master-Bedienteils alle Parameter wie Drehzahl und/oder Temperatur über die jeweilige maximale Bandbreite nutzbar sein. Die bevorzugt verschiedenen Slave-Bedienteile lassen bevorzugt nur eine eingeschränkte Nutzung der Küchenmaschine zu. Weiter bevorzugt kann eine bei einer Nutzung eines Master-Bedienteils eingestellte maximale Temperatur und/oder Drehzahl etc., wobei dieser Maximalwert unterhalb der von der Küchenmaschine unbeeinflusst ermöglichten maximalen Drehzahl etc. liegt, in dem Sinne auf einen Slave-Bedienteil sogleich übertragen sein, etwa mittels Funk oder auch durch nachfolgendes Erfassen einer entsprechenden mechanischen Schnittstelle beim Einsetzen des Slave-Bedienteils, dass hierdurch das Slave-Bedienteil im Hinblick auf die Drehzahl und/oder Temperatur etc., die damit einstellbar ist, begrenzt ist.

Hinsichtlich des Bedienteils ist bevorzugt ein mechanischer Drehsteller, alternativ ein elektronischer Drehsteller, insbesondere zur Einstellung der Drehzahl und/oder der Temperatur und/oder der Zeitdauer gegeben. Darüber hinaus ist über einen solchen Drehsteller auch ein Menü in einem Display der Küchenmaschine bedienbar. Die Eingrenzung von Parametern zufolge entsprechender Zuordnung eines Bedienteiles zu der Küchenmaschine ist nicht allein beschränkt auf den über dieses Bedienteil mechanisch oder elektrisch einzustellenden Parameter.

Auch ist bevorzugt, dass das Bedienteil ein Hauptschalter ist. Entsprechend ist bevorzugt, dass die Küchenmaschine erst mit Zuordnung eines entsprechenden

Bedienteiles eingeschaltet werden kann. Im Sinne eines Hauptschalters kann erst mit Zuordnung des Bedienteils die Stromversorgung als solche oder die Stromversorgung wichtiger Aggregate wie des Motors und/oder der Steuerung ermöglicht sein. Bevorzugt verfügen bei solcher Ausgestaltung eines oder mehrere, weiter bevorzugt alle, zu einer Küchenmaschine zugehörigen und in der beschriebenen Weise zuordbaren Bedienteile über die Funktion des Hauptschalters, so dass erst mit Ansetzen des einen, mehreren oder aller entsprechenden Bedienteile an der Küchenmaschine letztere zumindest in eine Betriebs-Bereitschaftsstellung versetzt ist.

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht (gerade) durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: in Ansicht eine Küchenmaschine der in Rede stehenden Art;
- Fig. 2: die Herausvergrößerung des Bereiches II in Figur 1;
- Fig. 3: eine der Figur 2 entsprechende Darstellung, jedoch nach Entfernen des von der Küchenmaschine abnehmbaren Bedienteiles;
- Fig. 4: das Bedienteil der ersten Ausführungsform in perspektivischer Darstellung;
- Fig. 5: den schematisch dargestellten Schnitt gemäß der Linie IV-IV in Figur 2;
- Fig. 6: eine Ausschnittdarstellung der Küchenmaschine, den Bereich eines eingesetzten Bedienteiles in Form eines Hauptschalters betreffend;
- Fig. 7: den schematischen Schnitt gemäß der Linie VII-VII in Figur 6;
- Fig. 8: in Ansicht eine Teil-Außenfläche des Küchenmaschinen-Gehäuses zur Aufnahme eines Bedienteils, eine dritte Ausführungsform betreffend;
- Fig. 9: das Bedienteil der dritten Ausführungsform in perspektivischer Darstellung; und
- Fig. 10: den Schnitt gemäß der Linie X-X in Figur 8, jedoch bei eingesetztem Bedienteil.

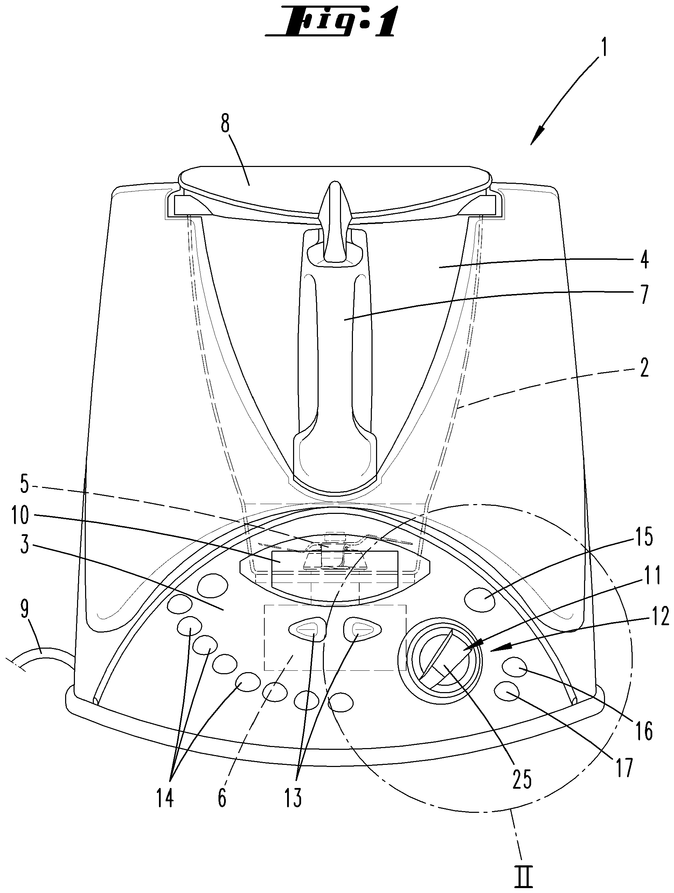

Dargestellt und beschrieben ist zunächst mit Bezug zu Figur 1 eine Küchenmaschine 1 mit einer Rührgefäß-Aufnahme 2 und einem Bedienfeld 3.

Der Küchenmaschine 1 ist ein Rührgefäß 4 zuordbar, in dem dieses in die Rührgefäß-Aufnahme 2 insbesondere im Fußbereich des Rührgefäßes 4 bevorzugt formschlüssig eingesetzt wird. In dem Rührgefäß 4 ist dem Rührgefäßboden zugeordnet ein Rührwerk 5 vorgesehen, welches über einen in der Küchenmaschine 1 unterhalb der Rührgefäß-Aufnahme 2 angeordneten, in der Zeichnung lediglich schematisch dargestellten Elektromotor 6 betrieben wird. Das Rührwerk 5 verbleibt in dem Rührgefäß 4 auch bei Entnahme des Rührgefäßes aus der Rührgefäß-Aufnahme 2, wozu weiter bevorzugt das Rührwerk 5 in Zuordnungsstellung über eine drehfeste Steckkupplung mit dem Elektromotor 6 verbunden ist.

Der Boden des Rührgefäßes 4 ist bevorzugt beheizbar zur Erhitzung eines in dem Rührgefäß 4 befindlichen Garguts. Bevorzugt kommt hier eine elektrische Widerstandsheizung zum Einsatz, welche bevorzugt in den Boden integriert ist.

Das Rührgefäß 4 ist bevorzugt topfartig mit im Wesentlichen kreisrunden Querschnitt ausgebildet, bei sich zur Topföffnung, d.h. nach oben hin konisch erweiterndem Querschnitt. Die Topfwandung besteht bevorzugt aus einem Metallwerkstoff.

Weiter weist das Rührgefäß einen senkrecht ausgerichteten Haltegriff 7 auf, welcher sockelseitig sowie topfrandseitig an dem Rührgefäß 4 festgelegt ist.

Das Rührgefäß 4 wird der Küchenmaschine 1 bevorzugt derart zugeordnet, dass der Haltegriff 7 sich freistehend zwischen Gerätegehäuse-Backen, dem Bedienfeld 3 zugewandt, erstreckt, wobei der Sockelbereich des Rührgefäßes 4 sich auf einem integralen Boden der Küchenmaschine 1 im Bereich der Aufnahme 2 abstützt, dies unter Kupplung von Rührwerksantrieb und Rührwerk 5 sowie bevorzugt elektrischer Kontaktierung der rührgefäßbodenseitigen Heizung.

Auf das Rührgefäß 4 wird ein Gefäßdeckel 8 aufgesetzt, welcher im Betrieb der Küchenmaschine 1, weiter insbesondere im Betrieb des Rührwerks 5 und/oder der bodenseitigen Widerstandsheizung verriegelt ist, weiter bevorzugt an dem Gehäuse der Küchenmaschine 1. Zentral besitzt der Rührgefäßdeckel 8 bevorzugt eine nicht dargestellte Einfüllöffnung.

Die Elektroversorgung des Elektromotors 6 sowie der weiter bevorzugt rührgefäßbodenseitig vorgesehenen Heizung und darüber hinaus auch der elektrischen Steuerung der gesamten Küchenmaschine 1 ist über ein Netzanschlusskabel 9 erreicht.

In dem Bedienfeld 3 ist zunächst bevorzugt ein Display 10 vorgesehen. Weiter bevorzugt trägt das Bedienfeld 3 mechanische Schalter und/oder Regler zum Einstellen unterschiedlicher Stellgrößen für den Betrieb der Küchenmaschine 1. So ist zunächst bevorzugt ein Bedienteil 12 in Form eines Drehstellers 11 vorgesehen, insbesondere zur Einstellung der Drehzahl des Rührwerks 5, wobei weiter bevorzugt über den Drehsteller 11 Rührwerk-Drehzahlstufen angewählt werden und jeder Rührwerk-Drehzahlstufe eine vorgegebene Rührwerk-Drehzahl zugeordnet ist.

In dem dargestellten Ausführungsbeispiel bevorzugt unterhalb des Displays 10 sind zwei Bedienteile 12 in Form mechanischer Schalter, weiter insbesondere in Form von Tasten 13 vorgesehen, mittels welcher bevorzugt eine Zeitdauer als Stellgröße eingegeben werden kann, über welche Zeitdauer bevorzugt das Rührwerk 5 und/oder die bodenseitige Heizung des Rührgefäßes 4 aktiviert wird.

Darüber hinaus ist eine Reihe von Bedienteilen 12 bevorzugt in Form von elektronischen oder mechanischen Tasten 14 vorgesehen, über welche unterschiedliche, vorgegebene Temperaturen wählbar sind, so weiter bevorzugt Temperaturen von 37°C bis hin zu 100°C. Mit der hierüber gewählten Temperatur und der gegebenenfalls über den Drehsteller 11 gewählten Rührwerk-Drehzahl wird das sich in dem Rührgefäß 4 befindliche Gargut über den mittels der Tasten 13 vorgegebenen Zeitraum wärmebeaufschlagt.

Zudem sind in dem Bedienfeld 3 bevorzugt weitere Bedienteile 12 insbesondere in Form von Tasten zum Aufrufen hinterlegter Sonderfunktionen vorgesehen, so insbesondere eine Taste 15 zur Aktivierung einer Turbofunktion, bei welcher kurzzeitig, d.h. bevorzugt über einen Zeitraum von 1 bis 3 Sekunden, weiter bevorzugt über einen dem Zeitraum der Tastenbeaufschlagung entsprechenden Zeitraum das Rührwerk 5 mit einer Höchstdrehzahl betrieben wird. So führt weiter bevorzugt die Turbofunktion zu einer kurzzeitigen Drehzahl des Rührwerks 5 von mehr als 10.000 U/min, weiter bevorzugt mehr als 12.000 U/min.

Ein weiteres Bedienteil 12 in Form einer Taste 16 dient bevorzugt zur Aktivierung einer Richtungsumkehr für das Rührwerk 5. Dreht das Rührwerk 5 in üblichem Betrieb bevorzugt im Rechtslauf, so ist zufolge Betätigung der Taste 16 die Umschaltung auf einen Linkslauf ermöglicht, wobei weiter bevorzugt diese Drehrichtungsumkehr bis zum Ablauf des über die Tasten 13 vorgegebenen Zeitraumes beibehalten wird. Weiter bevorzugt schaltet die Elektronik die Maschine 1 selbsttätig in die Standard-Drehrichtung um. Auch ist durch eine nochmalige Betätigung der Taste 16 während des Rührwerkbetriebs eine erneute Drehrichtungsumkehr durchführbar.

Zum Weiteren ist bevorzugt ein Bedienteil 12 in Form einer Taste 17 vorgesehen, insbesondere zur Aktivierung einer Teigrührfunktion, welche insbesondere bei der Herstellung schwerer Hefe- und Brotteige zur Anwendung kommt.

Die über den Drehsteller 11 sowie über die Tasten 13 bis 17, weiter insbesondere über die verschiedenen Bedienteile 12 einzustellenden Stellgrößen beziehungsweise aufzurufenden Funktionen sind bevorzugt in dem Display 10 anzeigbar.

In der Küchenmaschine 1 ist weiter bevorzugt eine Rezeptdatenbank hinterlegt. Diese beinhaltet, bevorzugt kategorisiert, eine Mehrzahl von Rezepten zur Zubereitung in der Küchenmaschine 1. Jedem Rezept zugeordnet sind bevorzugt die Parameter beziehungsweise Stellgrößen bezüglich Drehzahl des Rührwerks 5, Temperatur der Widerstandsheizung und Zeitdauer. Bevorzugt werden diese Stellgrößen mit Aktivierung des Rezeptablaufes selbsttätig durch die Küchenmaschine 1 gestellt oder dem Benutzer zur Bestätigung vorgegeben. Darüber hinaus können jedem Rezept beispielsweise Benutzer oder Benutzergruppen zugeordnet sein, so dass jeder Benutzer der Küchenmaschine 1 seine bevorzugten Rezepte quasi mit einem Knopfdruck aufrufen kann, ohne sich zeitaufwendig durch das Menü zu bewegen. Letzteres wird in üblicher Weise bevorzugt auf dem Display 10 angezeigt, welches Display 10 in einer weiter bevorzugten Ausführungsform als Touchscreen ausgebildet ist.

Die Küchenmaschine 1 ist in üblicher Weise manuell bedienbar, zufolge entsprechender Betätigung der Bedienteile 12, insbesondere Drehsteller 11 und Tasten 13 bis 17.

Insgesamt verfügt die Küchenmaschine 1 zu ihrer Steuerung, insbesondere zur Übersetzung der über die Bedienteile 12 und/oder über die Rezeptsteuerung aufgerufenen Parameter in eine entsprechende Stellgröße für das Rührwerk 5 und/oder die Heizung und/oder bezüglich der Zeitdauer über eine Steuerungssoftware, insbesondere Gerätesoftware.

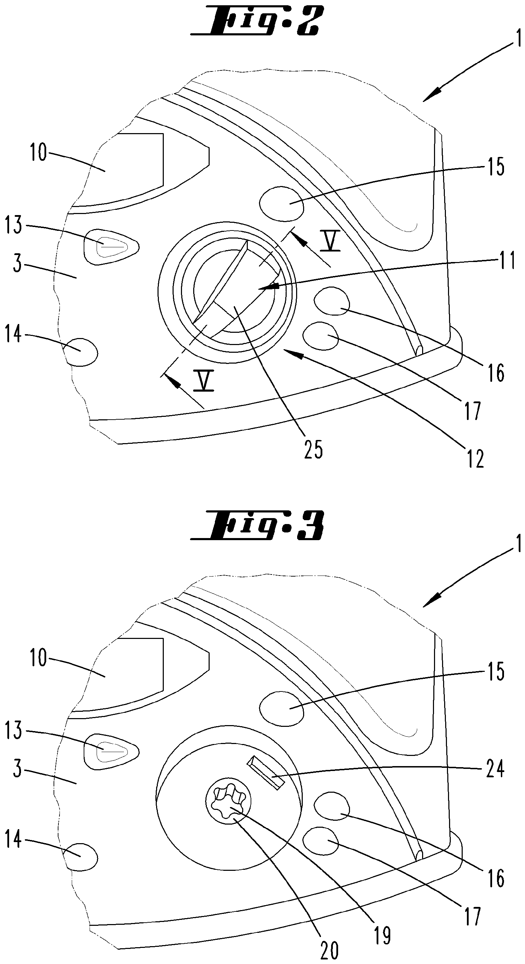

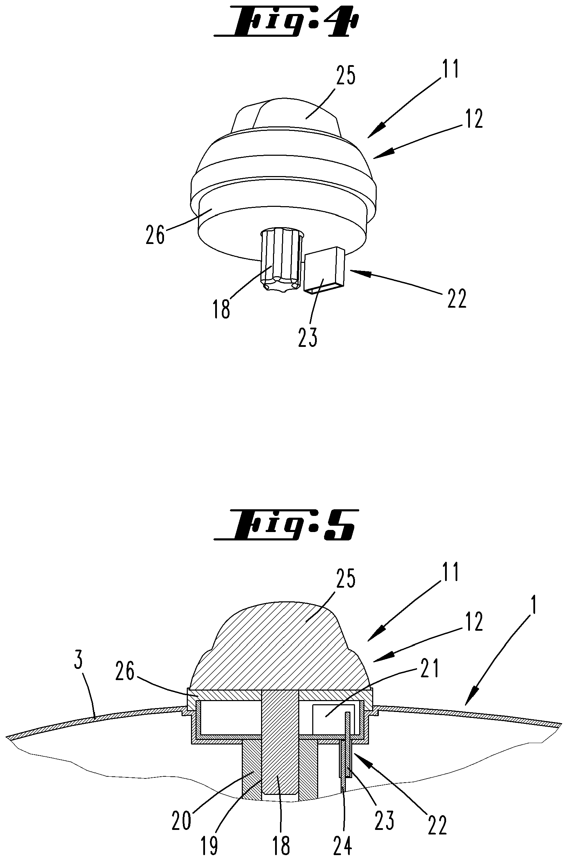

Zumindest ein Bedienteil 12, in dem dargestellten ersten Ausführungsbeispiel gemäß den Figuren 1 bis 5 der Drehsteller 11, ist von der Küchenmaschine 1 abnehmbar. Hierzu ist zunächst eine mechanische Steckverbindung vorgesehen, wozu der Drehsteller 11 einen als Mehrkant geformten Zapfen 18 aufweisen kann. Dieser Zapfen 18 kann in eine entsprechend geformte Aufnahme 19 einer die Drehbewegung des Drehstellers 11 übertragenden Welle 20 der Küchenmaschine 1 einsetzbar sein. Die Welle 20 wirkt bevorzugt auf ein elektronisches Drehstellerelement beziehungsweise einen Schalter zur Erfassung der Drehstellung der Welle 20 relativ zu einer Nullstellung derselben.

Weiter weist das Bedienteil 12, hier der Drehsteller 11, einen Datenspeicher 21 auf. Hierbei handelt es sich bevorzugt um einen nicht flüchtigen Speicher, in welchem bevorzugt benutzerspezifische Daten abgelegt sind. Hierbei handelt es sich bevorzugt um einen benutzerspezifischen Code und/oder um eine oder mehrere benutzerspezifische Stellgrößen der in der Küchenmaschine 1 durch den Benutzer einstellbaren Parameter. In weiterer Ausführungsform ist in dem Datenspeicher 21 die Gerätesoftware abgelegt, alternativ nur ein Teil der Gerätesoftware, welche sich auf die einzustellenden Parameter der Küchenmaschine 1 beziehen.

Zur Übertragung der Daten aus dem Datenspeicher 21 des Bedienteiles 12 auf die Küchenmaschine 1 ist das Bedienteil 12 weiter mit einer Datenschnittstelle 22 versehen. Diese ist in dem dargestellten Ausführungsbeispiel als USB-Schnittstelle ausgeführt. Entsprechend weist das Bedienteil einen sich bevorzugt parallel zur Erstreckung des Zapfens 18 erstreckenden USB-Stecker 23 auf. Dieser ragt, wie auch der Zapfen 18, bevorzugt über einen Boden des Bedienteiles 12 frei hinaus, zum Einstecken in eine maschinenseitigen USB-Aufnahme 24.

Die Datenschnittstelle 22 wie auch der Datenspeicher 21 sind in einem gegenüber einem Handhabungsabschnitt 25 des Bedienteiles 12 beziehungsweise Drehstellers 11 drehfesten Bedienteilabschnitt 26 vorgesehen, so dass in einer Betriebs-Bereitschaftsstellung des Bedienteiles 12 eine Drehung des Handhabungsabschnittes 25 - hier zum Einstellen der Drehzahl des Rührwerkes 5 - keinen Einfluss auf insbesondere die Datenschnittstelle 22 hat.

Das Bedienteil 12 ist entsprechend der in dem Datenspeicher 21 hinterlegten Daten benutzerspezifisch ausgelegt. Entsprechend ist bevorzugt eine Mehrzahl von zu der Küchenmaschine 1 passenden Bedienteilen 12 - hier Drehsteller 11 - vorgesehen, wobei weiter bevorzugt jedem Benutzer der Küchenmaschine 1 oder einer Benutzergruppe ein bestimmtes Bedienteil 12 zugeordnet ist.

Mit Einsetzen des Bedienteiles 12 in die entsprechende Aufnahme der Küchenmaschine 1, d.h. entsprechend mit kuppelndem Einsetzen des Zapfens 18 in die Aufnahme 19 und damit einhergehender Herstellung der elektrischen Verbindung zwischen USB-Stecker 23 und USB-Aufnahme 24 werden bevorzugt selbsttätig, insbesondere mit Einschalten der Küchenmaschine 1 über einen Hauptschalter oder dergleichen die in dem Bedienteil 12 abgelegten Daten an die Küchenmaschine 1 übermittelt.

Dies kann die Übermittlung der gesamten Gerätesoftware sein, so dass die Küchenmaschine 1 nur nutzbar ist mit Einsetzen eines, die entsprechende Gerätesoftware aufweisenden Bedienteiles 12. Auch kann hierdurch ein Update der Gerätesoftware der Küchenmaschine 1 durchgeführt werden, entsprechend zufolge Überspielen der Software von dem Bedienteil 12 auf die Küchenmaschine 1 und Überschreiben der maschinenseitig bereits vorgesehenen Software.

In weiter bevorzugter Ausgestaltung sind die in dem Bedienteil 12 abgespeicherten Daten dazu geeignet, bestimmte Gerätefunktionen zu deaktivieren oder zu aktivieren, darüber hinaus Stellgrößen, wie beispielsweise Drehzahl und/oder Temperatur und/oder Zeit einzugrenzen. Auch bevorzugt wird benutzerspezifisch abhängig eine Auswahl von Rezepten ausschließlich oder bevorzugt angeboten.

So ist in einer bevorzugten Ausführungsform ein Bedienteil 12 vorgesehen, welches Daten beinhaltet in der Form, dass unter Nutzung dieses Bedienteiles 12 nur eine beschränkte Anzahl von Rezepten zur Verfügung steht, darüber hinaus gegebenenfalls auch die Drehzahl des Rührwerkes 5 nur bis zu einer maximalen Drehzahl einstellbar ist, die geringer ist, als die mögliche, einzustellende Höchstdrehzahl bei uneingeschränktem Betrieb. Auch ist diesbezüglich eine Einschränkung hinsichtlich der Heizleistung und/oder der Zeiteinstellung möglich.

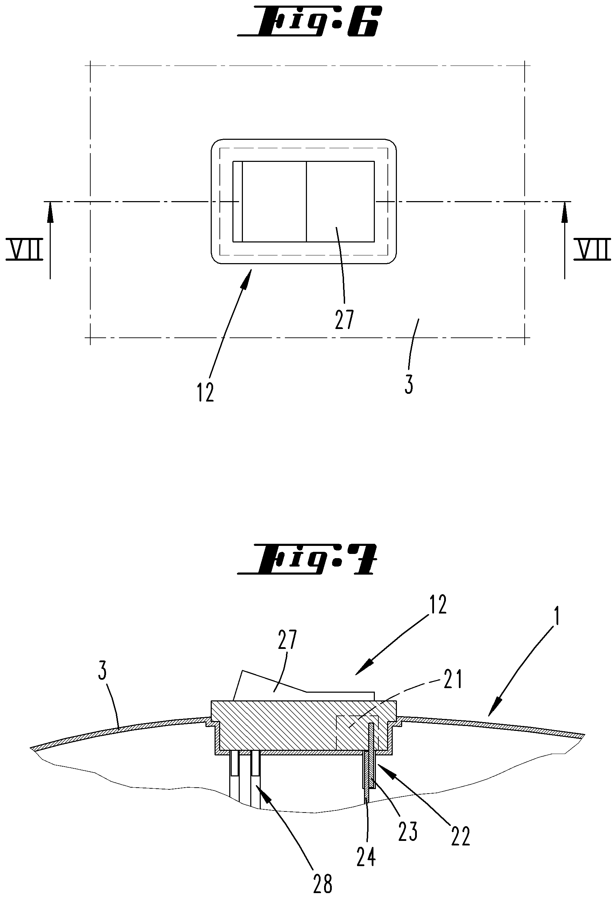

In den Figuren 6 und 7 ist eine alternative Ausführungsform dargestellt. Hier ist das Bedienteil 12 ein Hauptschalter 27. Dieser ist ebenfalls von der Küchenmaschine 1 abnehmbar, wobei in einer Zuordnungsstellung bevorzugt elektrisch zwischen dem Netzanschlusskabel 9 und einem nachfolgenden Transformator oder dergleichen geschaltet ist.

Der Hauptschalter 27 ist einer entsprechenden Aufnahme der Küchenmaschine 1 zuordbar, wobei er (erst) in der Zuordnungsstellung eine elektrische Verbindung 28 herstellt. Ohne den Hauptschalter 27 ist eine Inbetriebnahme der Küchenmaschine 1 bevorzugt nicht möglich.

Auch der Hauptschalter 27 verfügt über einen Datenspeicher 21 und eine Datenschnittstelle 22. Diese Datenschnittstelle 22 ist in dem dargestellten Ausführungsbeispiel ein USB-Stecker 23, der mit einer USB-Aufnahme 24 der Küchenmaschine 1 elektrisch zusammenwirkt. Bezüglich der Einwirkung der in dem Datenspeicher 21 abgelegten Daten zur benutzerspezifischen Einstellung der Küchenmaschine 1 wird auf die Ausführungen bezüglich des Bedienteiles 12 in Form des Drehstellers 11 in der ersten Ausführungsform verwiesen.

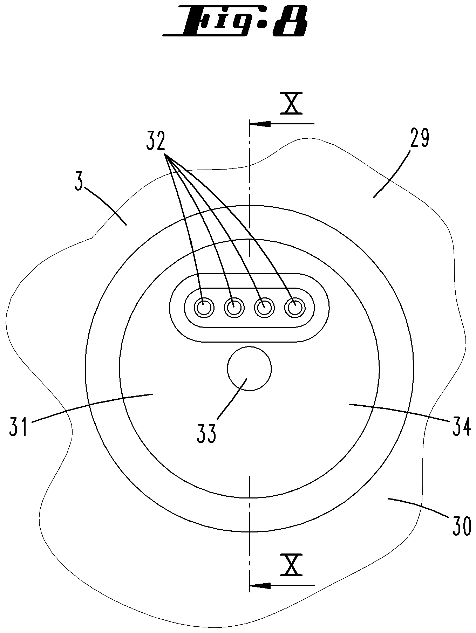

Die Figuren 8 bis 10 zeigen eine Ausführungsform, bei welcher im Einzelnen die Küchenmaschine 1 ein Gehäuse 29 aufweist, mit einer Außenfläche 30. In einer der Außenflächen 30, hier bevorzugt in der das Bedienfeld 3 ausformenden Außenfläche ist eine Teil-Außenfläche 31 ausgebildet. Die Teil-Außenfläche 31 stellt einen gegenüber der umgebenden Außenfläche 30 zum Inneren der Küchenmaschine 1 hin versetzten Bereich dar. Ersichtlich ist die Teil-Außenfläche 31 gegenüber der umgebenden Außenfläche 30 klein. Sie entspricht weniger als der Hälfte, bevorzugt weniger als einem Drittel, weiter bevorzugt weniger als einem Zehntel der umgebenden Außenfläche 30.

Die Teil-Außenfläche 31 ist mit Ausnahme eines Übergangsbereiches in die umgebende Außenfläche 30 ebenflächig ausgebildet. Eine weitere Ausnahme können hierbei metallische Kontaktelemente 32 bilden, vergleiche Figur 8. Die Teil-Außenfläche 31 ist gegenüber der genannten Außenfläche 30 der Küchenmaschine zurückversetzt. Innerhalb der Teil-Außenfläche 31 bilden die metallischen Kontaktelemente 32 einen Bereich dieser Teil-Außenfläche aus.

Die Teil-Außenfläche 31 ist bevorzugt als abgeschlossener Bereich ausgebildet.

Die Teil-Außenfläche 31 ist weiter bevorzugt in einer Tiefenrichtung, zum Inneren der Küchenmaschine hin mit Ausnahme einer bevorzugt zentralen Öffnung 33 zum Durchsatz eines Zapfens 18 eines Bedienteils 12, geschlossen ausgebildet. Sie weist keine weiteren Durchbrüche, Öffnungen oder Vertiefungen in Richtung auf das Innere der Küchenmaschine auf. Die zentrale Öffnung 33 ist bei abgenommenem Bedienteil 12 bevorzugt verschlossen, beispielsweise durch eine selbsttätig in die Verschlussposition verlagerbare Klappe. Die Teil-Außenfläche 31 stellt somit eine im Wesentlichen glatte, leicht reinigbare Fläche dar. Dem steht auch nicht entgegen, wenn die Kontaktelemente, wie nachstehend in weiterer Einzelheit erläutert, demgegenüber nochmals leicht angehoben oder abgesenkt angeordnet sind.

Die metallischen Kontaktelemente 32 sind in dem möglichen Fall zwar innerhalb der Absenkung der Teil-Außenfläche 31 angeordnet; gegenüber dem ebenflächigen Boden 34 der Teil-Außenfläche 31, der auch als Muldenboden angesprochen sein kann, sind sie jedoch bevorzugt leicht erhöht angeordnet.

Sie können auch ebenengleich oder etwas versenkt zu dem Boden 34 angeordnet sein. Die Erhöhung ist bevorzugt (nur) in dem Maße, dass sie sich zwar erhöht zu dem umgebenden Bereich des Bodens 34 erstrecken, jedoch unterhalb der Randkonturlinie beziehungsweise unterhalb eines umgebenden Flächenbereiches der Gehäuse-Außenfläche. Die Erhöhung ist in weiterer Einzelheit rippenartig gebildet. Die Kontaktflächen bilden Teilbereiche einer Stirnfläche einer solchen rippenartigen Erhöhung.

Es sind insgesamt bevorzugt vier metallische Kontaktelemente 32 vorgesehen, die auch bevorzugt auf einer Geraden nebeneinander angeordnet sind.

Die Teil-Außenfläche 31 ist, bezüglich ihrer Randkontur, beim Ausführungsbeispiel kreisförmig gebildet mit der mittig ausgebildeten Öffnung 33.

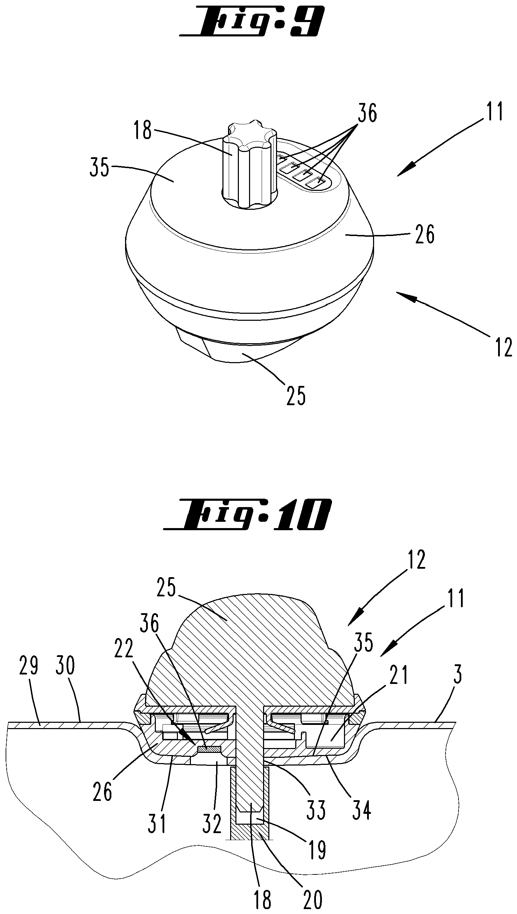

In Figur 9 ist das, den Datenspeicher 21 aufweisende Bedienteil 12 in Form eines Drehstellers 11 dargestellt.

Das Bedienteil 12 weist eine Anlagefläche 35 auf, mit der es im Verbindungszustand mit der Küchenmaschine 1 an der Teil-Außenfläche 31 anliegt. In der Anlagefläche 35 sind mehrere Kontaktelemente 36, beim Ausführungsbeispiel vier nebeneinander angeordnete Kontaktelemente 36, entsprechend den beschriebenen vier Kontaktelementen 32 an der Küchenmaschine, ausgebildet.

Entsprechend der leicht erhabenen Ausbildung des Bereiches, in welchem die Kontaktelemente 32 der Küchenmaschine angeordnet sind, sind die Kontaktelemente 36 des Bedienteils 12 in einem gegenüber der Anlagefläche 35 etwas versenkten Bereich angeordnet. Der versenkte Bereich kann nutartig gebildet sein.

Die insbesondere durch die Kontaktelemente 36 im Bedienteil 12 ausgebildete Datenschnittstelle 22, wie auch der Datenspeicher 21, sind entsprechend der ersten Ausführungsform in einem gegenüber dem Handhabungsabschnitt 25 drehfesten Bedienteilabschnitt 26 vorgesehen. Der Handhabungsabschnitt 25 ist hierbei bevorzugt drehfest mit dem den Bedienteilabschnitt 26 durchsetzenden und frei über die Anlagefläche hinaus ragenden Zapfen 18 verbunden.

Mit Ansetzen des Bedienteils 12 an die Teil-Außenfläche 31 durchsetzt der Zapfen 18 die Öffnung 33 zum drehfesten Eingriff in die Aufnahme 19 der Welle 20. Die Anlagefläche 35 liegt bevorzugt vollflächig auf der Teil-Außenfläche 31 auf, wobei der Bedienteilabschnitt 26 zumindest teilweise aufgenommen ist in der die Teil-Außenfläche 31 bildenden Einsenkung des Gehäuses 29.

In dieser Steckposition liegen die Kontaktelemente 36 des Bedienteils 12 bevorzugt flächig auf den Kontaktelementen 32 der Küchenmaschine 1 auf, womit eine Datenübertragung erreichbar ist.

Um eine lagerichtige Positionierung, insbesondere der Kontaktelemente 32 und 36 zueinander sicherzustellen, kann eine Positionierungshilfe vorgesehen sein, beispielsweise in Form einer unrunden Außenkontur von Teil-Außenfläche 31 und korrespondierendem Bedienteilabschnitt 26.

Auch kann die lagerichtige Positionierung durch eine magnetisch wirkende Fixierung insbesondere des Bedienteilabschnitts 26 in beziehungsweise an der Teil-Außenfläche 31 erreicht sein, wozu einerseits beispielsweise im Boden des Bedienteilabschnitts 26 und korrespondierend hierzu beispielsweise im Boden 34 der Teil-Außenfläche 31 entsprechende Magnete vorgesehen sind. Diese Magnete oder magnetisierte Bereiche können darüber hinaus auch zur (weiteren) Festlegung des Bedienteils 12 dienen.

**Bezugszeichenliste:**

| | | | |
|---|---|---|---|
| 1 | Küchenmaschine | 25 | Handhabungsabschnitt |
| 2 | Rührgefäß-Aufnahme | 26 | Bedienteilabschnitt |
| 3 | Bedienfeld | 27 | Hauptschalter |
| 4 | Rührgefäß | 28 | elektrische Verbindung |
| 5 | Rührwerk | 29 | Gehäuse |
| 6 | Elektromotor | 30 | Außenfläche |
| 7 | Haltegriff | 31 | Teil-Außenfläche |
| 8 | Rührgefäßdeckel | 32 | Kontaktelemente |
| 9 | Netzanschlusskabel | 33 | Öffnung |
| 10 | Display | 34 | Boden |
| 11 | Drehsteller | 35 | Anlagefläche |
| 12 | Bedienteil | 36 | Kontaktelemente |
| 13 | Taste | | |
| 14 | Taste | | |
| 15 | Taste | | |
| 16 | Taste | | |
| 17 | Taste | | |
| 18 | Zapfen | | |
| 19 | Aufnahme | | |
| 20 | Welle | | |
| 21 | Datenspeicher | | |
| 22 | Datenschnittstelle | | |
| 23 | USB-Stecker | | |
| 24 | USB-Aufnahme | | |

## Patentansprüche

1. Elektromotorisch betriebene Küchenmaschine (1) mit einem Rührgefäß (4) und einem Rührwerk (5), wobei die Küchenmaschine (1) benutzerspezifisch einstellbar ist, wobei weiter ein händisch bedienbares Bedienteil (12) vorgesehen ist, bspw. zur Einstellung einer gewünschten Drehzahl, wobei darüber hinaus das Bedienteil (12) als von der Küchenmaschine (1) abnehmbares Element gebildet ist, **dadurch gekennzeichnet, dass** das Bedienteil (12) einen Datenspeicher (21) und eine Datenschnittsstelle (22) aufweist, zum geräteseitigen Auslesen der in dem Datenspeicher (21) enthaltenen Daten, wobei mittels der Daten eine benutzerspezifische Einstellung festlegbar ist, und dass das Bedienteil (12) ein Drehsteller (11) ist.

2. Küchenmaschine nach Anspruch 1, **dadurch gekennzeichnet, dass** eine Mehrzahl von zu der Aufnahme des Bedienteils (12) in der Küchenmaschine (1) passende Bedienteile (12) vorgesehen sind und dass die Bedienteile (12) hinsichtlich der in ihren Daten festgelegten, jeweiligen benutzerspezifischen Einstellungen der Küchenmaschine (1) unterschiedlich gestaltet sind.

3. Küchenmaschine nach einem der vorhergehenden Ansprüche, **dadurch gekennzeichnet, dass** das Bedienteil (12) ein Hauptschalter (27) ist.

## Claims

1. Kitchen appliance (1), operated by an electric motor, comprising a stirring vessel (4) and a stirring mechanism (5), it being possible for the kitchen appliance (1) to be set in a user-specific manner, a manually operable operating element (12) also being provided, for example for setting a desired rotational speed, in addition the operating element (12) being formed as an element that can be removed from the kitchen appliance (1), **characterised in that** the operating element (12) comprises a data memory (21) and a data interface (22) so that the data contained in the data memory (21) can be read out at the appliance, it being possible for a user-specific setting to be determined by means of the data, and **in that** the operating element (12) is a rotary actuator (11).

2. Kitchen appliance according to claim 1, **characterised in that** a plurality of operating elements (12) are provided that are suitable for receiving the operating element (12) in the kitchen appliance (1) and **in that** the operating elements (12) are designed differently in view of the particular user-specific settings of the kitchen appliance (1) that are determined in the data of said operating elements.

3. Kitchen appliance according to any of the preceding claims, **characterised in that** the operating element (12) is a main switch (27).

## Revendications

1. Robot de cuisine à moteur électrique (1), comprenant un récipient de mélange (4) et un agitateur (5), dans lequel le robot de cuisine (1) est réglable spécifiquement à l'utilisateur, dans lequel en outre est prévu un organe de commande (12) actionnable manuellement, par exemple pour régler une vitesse de rotation souhaitée, dans lequel de surcroit l'organe de commande (12) est conçu détachable du robot de cuisine (12), **caractérisé en ce que** l'organe de commande (12) comprend une mémoire de données (21) et une interface de données (22) pour lire côté appareil les données contenues dans la mémoire de données (21), dans lequel un réglage spécifique à l'utilisateur peut être déterminé au moyen des données et **en ce que** l'organe de commande (12) est un dispositif de réglage rotatif (11).

2. Robot de cuisine selon la revendication 1, **caractérisé en ce que** sont prévus une pluralité d'organes de commande (12) adaptés à la partie de réception de l'organe de commande (12) dans le robot de cuisine (1) et **en ce que** les organes de commande diffèrent en ce qui concerne les réglages du robot de cuisine (1) spécifiques à l'utilisateur respectifs qui sont définis dans leurs données.

3. Robot de cuisine selon l'une des revendications précédentes, **caractérisé en ce que** l'organe de commande (12) est un commutateur principal (27).
